# FASCICULE DE BREVET EUROPEEN

(11) **EP 1 802 389 B1**
(45) Date de publication et mention de la délivrance du brevet: **19.09.2018**
(21) Numéro de dépôt: 05797429.7
(22) Date de dépôt: 16.08.2005
(51) Int. Cl.: B01J 3/02, B01J 19/26, C02F 11/08

(54) **DISPOSITIF ET INSTALLATION D'INJECTION DE MATIÈRES PARTICULAIRES DANS UNE ENCEINTE ET PROCÉDÉ ASSOCIÉ**
VORRICHTUNG UND INSTALLATION ZUM EINSPEISEN VON PARTIKELMATERIALIEN IN EINE KAMMER UND DAZUGEHÖRIGES VERFAHREN
DEVICE AND INSTALLATION FOR INJECTING PARTICULATE MATERIALS INTO A CHAMBER, AND CORRESPONDING METHOD

(30) Priorité: 25.08.2004 FR 0451902
(43) Date de publication de la demande: 04.07.2007
(73) Titulaire: Commissariat à l'Énergie Atomique et aux Énergies Alternatives, 75015 Paris (FR)
(72) Inventeur: JOUSSOT-DUBIEN, Christophe, F-30650 ROCHEFORT DU GARD (FR); TURC, Hubert-Alexandre, F-30133 LES ANGLES (FR)
(74) Mandataire: Ahner, Philippe
(86) Numéro de dépôt international: PCT/FR2005/050673
(87) Numéro de publication internationale: WO 2006/024806

(56) Documents cités:
- DE-B- 1 056 591
- JP-A- 2001 073 930

## Description

### DOMAINE TECHNIQUE

L'invention concerne un dispositif d'injection de matières dans une enceinte de réaction d'un procédé de traitement en eau sous pression.

Elle concerne également une installation de traitement de matières comprenant une enceinte de réaction ayant une entrée des matières à traiter, une entrée d'un mélange gazeux oxydant, par exemple de l'air, comprimé à la pression opératoire, une sortie d'un effluent liquide/gaz et un dispositif d'injection de la matière raccordé à l'entrée des matières à traiter.

Enfin, elle concerne un procédé de traitement de matières dans une installation conforme à l'invention.

Dans le domaine des procédés sous pression pour le traitement de déchets, on identifie deux grandes familles de procédés utilisant l'eau comme milieu réactionnel : les procédés d'oxydation par voie humide (OVH) et les procédés d'oxydation hydrothermale (OHT). L'OVH se caractérise par des conditions de température et de pression inférieures aux conditions critiques de l'eau. Elle opère de ce fait en conditions diphasiques et conduit à des cinétiques de minéralisation d'un, voire deux ordres de grandeurs plus longues que celle obtenues en OHT.

Les procédés d'oxydation hydrothermales (OHT) dans l'eau super critique utilisent les propriétés particulières de l'eau pour une pression et une température supérieures à 221 bar et 374°C et en particulier sa faible constante diélectrique permettant la solubilisation de composés hydrophobes, ses faibles densité et viscosité permettant le mélange en toutes proportions avec des composés gazeux. Le milieu réactionnel obtenu permet un mélange intime et homogène entre des composés organiques et l'oxygène faisant fonction de carburant et de comburant dans la réaction de minéralisation qui peut alors s'amorcer spontanément grâce à la température du milieu. Les gaz tels que O₂, CO₂, N₂ sont totalement solubles dans l'eau ainsi que de nombreux alcanes. Ces combustions peuvent alors se dérouler sans la limitation de transfert interphase généralement observée aux basses températures ou aux basses pressions, comme dans les incinérateurs ou les procédés d'oxydation par voie humide et conduire à une minéralisation totale de la matrice organique en des temps de séjour inférieurs à la minute. Les procédés d'OHT sont donc particulièrement adaptés au traitement de déchets organiques nécessitant une destruction totale de leur matrice organique.

Par ailleurs, le brevet allemand DE 10 56 591 B divulgue un dispositif pour permettre le chargement uniforme de matières à traiter dans une cuve de réaction. De plus, la demande de brevet japonais JP 2001-073930 A divulgue un autre exemple de dispositif d'injection de matières organiques.

Toutefois, l'un des problèmes auquel est confronté l'utilisateur de ces technologies est l'impossibilité de traiter des effluents contenant de la matière solide sous forme particulaire dispercée dans un fluide. En effet, ces procédés sous haute pression sont systématiquement continus et, par conséquent, ils sont limités à des effluents liquides pompables. Or, les particules d'un diamètre supérieur à 7 µm ne sont pas admises par les pompes à haute pression, c'est-à-dire dont la pression de refoulement est supérieure à 100 bar utilisées classiquement. Les procédés d'oxydation dans l'eau sous pression sont donc très sensibles à la nature du flux traité. Cela interdit leur application dès que le flux à traiter contient des matières solides particulaires en suspension.

D'autre part, ces procédés requièrent une dépense d'énergie pour pressuriser les fluides à la pression opératoire. Cette exigence peut être rédhibitoire pour les procédés à fort débit et rend généralement les procédés OHT peu compétitifs en terme de coût d'exploitation face aux procédés concurrents pour le traitement des déchets industriels spéciaux.

La présente invention a précisément pour objet une installation d'injection et un procédé de traitement de matières en eau sous pression qui remédient à ces inconvénients. Elle s'applique tant aux procédés OVH qu'aux procédés OHT que nous appellerons dans leur globalité procédés en eau sous pression. Toutefois, les procédés OHT sont l'application préférée de l'invention. En effet, les conditions opératoires à hautes températures et à hautes pressions de l'OHT rendent la mise en oeuvre de l'invention encore plus avantageuse.

Ces buts sont atteints, conformément à l'invention, par une installation selon la revendication 1. L'ensemble mobile est avantageusement constitué par un soufflet ou par un piston mobile.

Grâce à ces caractéristiques, le dispositif d'injection de matières en suspension de la présente installation ne met en oeuvre aucun joint dynamique à haute pression au niveau des systèmes de circulation des fluides et en particulier sur le circuit emprunté par le déchet. Ainsi, il permet d'injecter jusqu'à une pression de 300 bar un déchet contenant des matières en suspension. En outre, il est robuste face aux risques de fuite, contrairement aux pompes à piston du marché.

Avantageusement, le dispositif comporte une turbine située à l'entrée de la capacité de compression, et permettant d'homogénéiser la matière à traiter. La turbine est de préférence entraînée magnétiquement.

De préférence le dispositif comporte un dispositif de suivi du mouvement de l'ensemble mobile. Dans une réalisation, il comporte un tube de guidage fixé à une paroi de la capacité de mise en pression, l'axe de ce tube étant disposé perpendiculairement au sens de déplacement de l'ensemble mobile, et un axe guide fixé à l'ensemble mobile et coulissant dans le tube guide. Le dispositif de suivi de l'ensemble mobile est par exemple un dispositif magnétique de recopie de la position de l'axe guide dans le tube guide. Il permet de réguler les cycles de remplissage et de vidange de la capacité de compression.

L'installation de traitement de matières est définie par la revendication 1.

Un séparateur liquide/gaz permet de séparer l'effluent sortant de l'enceinte de réaction en une phase liquide et une phase gazeuse, la phase liquide étant introduite dans la capacité de mise en pression du dispositif d'injection.

Ainsi, la matière à traiter est poussée dans l'enceinte de réaction par transmission hydraulique de manière isobare, par exemple par une pompe volumétrique, utilisant l'effluent aqueux comme fluide hydraulique. La consommation de puissance pour réaliser ce mouvement est minime comparée à celle qui serait nécessaire pour la pressurisation, à un débit identique, d'un fluide de la pression atmosphérique à la pression opératoire.

Conformément à une autre caractéristique avantageuse de l'invention, la phase gazeuse de l'effluent issue du séparateur liquide/gaz est introduite dans une turbine à gaz. Ceci permet de valoriser l'énergie de pression contenue dans cette phase gazeuse. La turbine peut être utilisée, par exemple, pour entraîner le groupe de compression du mélange gazeux oxydant introduit dans l'enceinte de réaction.

Ceci permet de valoriser au mieux la puissance pneumatique que contient l'effluent gazeux sous haute pression et de diminuer la puissance électrique nécessaire à la génération du débit d'air du procédé.

Conformément à une autre caractéristique avantageuse de l'invention, l'installation comporte deux dispositifs d'injection de matières fonctionnant en opposition de phase.

Cette disposition permet de supprimer les discontinuités dans l'injection des matières, par exemple des déchets, dans l'enceinte de réaction. Les deux dispositifs d'injection utilisent les éléments communs que sont la pompe de circulation des matières, la pompe volumétrique de circulation du fluide hydraulique et l'enceinte de réaction.

Avantageusement, les matières sont des matières solides sous formes particulaire dispercée dans un fluide.

Selon le procédé de traitement de matières en eau sous pression dans une installation conforme à l'invention, on remplit la capacité de compression de matières à traiter, on pressurise et on injecte ces matières en mettant en communication la capacité de mise en pression avec la sortie de la phase gazeuse de la phase liquide gaz, respectivement avec la sortie de la phase liquide du séparateur liquide/gaz, on poursuit l'injection des matières jusqu'à ce que la capacité de compression soit vide, on dépressurise la capacité de compression des matières à traiter en interrompant la communication entre la capacité de mise en pression et l'enceinte de réaction, par exemple au moyen d'une vanne de sectionnement. On reprend alors le même cycle, le remplissage des matières à traiter dans la capacité de compression ayant pour effet d'évacuer le fluide hydraulique de mise en pression vers un réservoir.

Les matières à traiter sont introduites au moyen d'une pompe centrifuge à grand débit, par exemple entre dix et vingt fois le débit d'injection des matières à traiter dans l'enceinte réaction. La durée du cycle est de préférence comprise entre cinq et dix minutes afin, notamment, d'éviter une fatigue des organes de sectionnement.

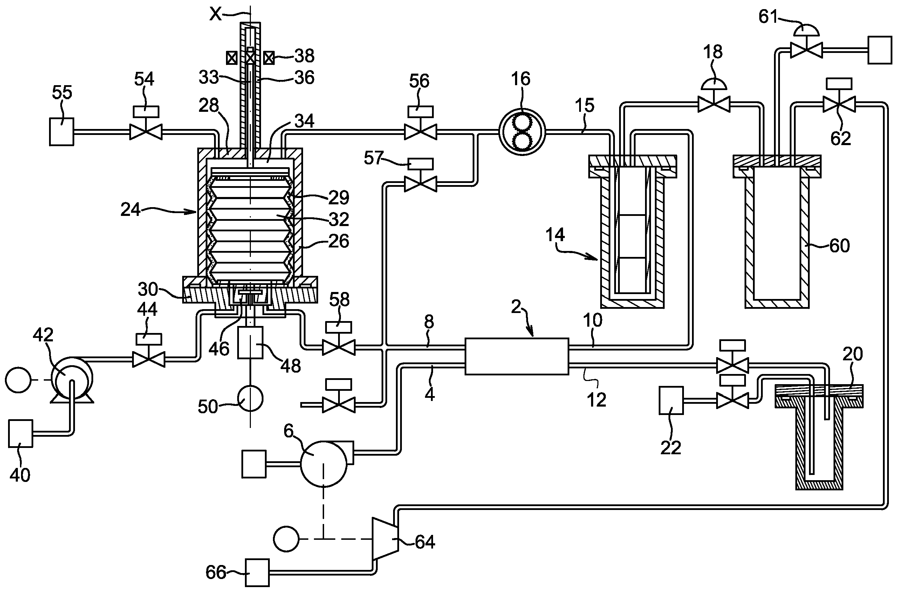

D'autres caractéristiques et avantages de l'invention apparaîtront encore à la lecture de la description qui suit d'un exemple de réalisation donné à titre illustratif en référence à la figure unique.

On décrit ci-après une installation et un procédé d'oxydation hydrothermale pour le traitement d'un déchet. La réaction se produit dans une enceinte réactionnelle 2. Cette enceinte est de type conventionnel. On peut par exemple utiliser une enceinte de forme cylindrique allongée comportant un corps principal tubulaire et un corps interne disposé dans le corps principal, comme décrit dans le brevet français FR 2 814 967. L'enceinte réactionnelle ne fait pas partie de l'invention. En conséquence, elle ne sera pas décrite plus en détail.

L'enceinte réactionnelle 2 est alimentée en air sous pression et au débit nominal par l'entrée 4. L'air est injecté directement dans la zone réactionnelle par un compresseur à haute pression 6 à partir de l'ambiance ou par un prélèvement dans le ciel d'une cuve d'entreposage du déchet, ce qui permet d'en assurer le renouvellement le cas échéant.

L'enceinte réactionnelle 2 est alimentée en déchet sous pression et au débit nominal par l'entrée 8. L'effluent gaz/eau sort de l'enceinte par la sortie 10 et la saumure par la sortie 12. Cette saumure contient la majeure partie des éléments minéraux du déchet initial. Dans l'enceinte de réaction 2 les conditions opératoires classiques en eau sous pression considèrent que le déchet est converti en CO₂, N₂ et H₂O et que le flux à la sortie 10 est constitué du mélange refroidi des effluents aqueux et gazeux du procédé.

Le mélange d'effluents aqueux/gazeux issus de l'enceinte 2 est séparé à la pression opératoire et à la température opératoire dans le séparateur gaz/liquide 14. L'effluent aqueux est prélevé par la pompe de transfert 16 qui est préférence une pompe volumétrique, par exemple une pompe à engrenages. L'effluent gazeux est évacué via la vanne 18 de régulation ou déverseur qui régule ainsi la pression dans la zone réactionnelle, dans le séparateur liquide/gaz 14 et dans les équipements qui sont raccordés à cet ensemble.

La saumure prélevée à la sortie 12 à température ambiante par impulsions successives est envoyée dans la capacité tampon 20 avant d'être envoyée à l'entreposage 22.

Le dispositif d'injection 24 qui constitue l'un des éléments essentiels de la présente invention est constitué d'un corps principal 26 de forme cylindrique de section circulaire qui est disposé de préférence verticalement. La partie supérieure, le corps 26 comporte un fond 28. Sa partie inférieure ouverte est fermée par une bride 30.

Le volume intérieur du corps principal 26 est compartimenté en deux volumes variables par un ensemble mobile. Dans l'exemple, l'ensemble mobile est constitué par un soufflet 29 fixé à sa partie inférieure sur la bride 30. Le soufflet divise le volume du corps intérieur du corps 26 en une capacité 32 de pressurisation du déchet et une capacité 34 de mise en pression hydraulique de ce déchet. Pour permettre un déplacement non entravé du soufflet le ratio entre la hauteur et le diamètre de la capacité de pressurisation doit être compris entre 2 et 5. Le déplacement du soufflet est guidé sur l'axe X de la capacité 24 par un axe guide 33 qui est solidaire du soufflet et qui coulisse dans un tube guide 36. Sur l'axe guide est fixé un dispositif magnétique 38 pour la recopie de la position de cet axe à l'extérieur du tube guide. Il est ainsi possible de suivre par une mesure de distance l'état de remplissage du soufflet.

Le déchet est injecté à basse pression mais fort débit dans la capacité de pressurisation du déchet 32 à partir de l'entreposage 40 par une pompe centrifuge à basse pression 42. La capacité de pressurisation 32 et la pompe 42 sont isolées par une vanne de sectionnement à actionneur 44. Une turbine 46 mise en rotation par un entraînement magnétique 48 lequel est actionné par un moteur électrique 50 est montée sur la bride 30. La turbine 46 a pour fonction homogénéiser le déchet qui pénètre dans la capacité de pressurisation 32.

Lorsque la capacité de pressurisation 32 est entièrement remplie c'est-à-dire lorsqu'elle est dans la position déployée du soufflet 29, la capacité de mise en pression hydraulique 34 est mise en communication avec le séparateur liquide/gaz 14 et, plus particulièrement, avec la sortie 15 de la phase liquide du séparateur 14. Ceci s'opère par la fermeture de la vanne de sectionnement 54 permettant d'évacuer la phase aqueuse vers l'entreposage 55 et en ouvrant la vanne de sectionnement 56. Le fluide hydraulique est injecté dans la capacité de mise en pression 34 par la pompe à engrenages 16 à entraînement magnétique. Ceci permet l'injection à haute pression et à débit contrôlé depuis la capacité de pressurisation 32 du déchet dans l'entrée 8 de l'enceinte de réaction 2, cette liaison étant isolée par une vanne de sectionnement à actionneur 58. Le déchet est poussé dans l'enceinte de réaction par transmission hydraulique de manière isobare par la pompe volumétrique 16 utilisant l'effluent aqueux comme un fluide hydraulique. La consommation de puissance pour réaliser ce mouvement est minime comparée à l'énergie nécessaire pour la pressurisation à un débit identique d'un fluide de la pression atmosphérique jusqu'à la pression opératoire. Ce fonctionnement repose sur l'hypothèse que le flux d'eau qui est injecté avec le déchet dans l'enceinte de réaction 2 se retrouve intégralement dans l'effluent issu du réacteur.

Une vanne de sectionnement à actionneur 57 permet à la pompe volumétrique 16 de recirculer indéfiniment l'effluent aqueux à l'entrée 8 de l'enceinte de réaction 2.

Le dispositif d'injection de déchets fonctionne par cycles comportant au moins :
- un remplissage rapide du déchet à basse pression dans la capacité 32 ;
- une pressurisation du déchet par mise en contact avec le fluide hydraulique par l'intermédiaire du soufflet 29 ;
- une injection à haute pression et à débit contrôlé par la pompe de circulation 16 ;
- une dépressurisation de la capacité de mise en pression 34 ;
- une vidange à basse pression du fluide hydraulique parallèlement au remplissage suivant du soufflet 29 en déchet.

Pour que ce fonctionnement n'induise pas de perturbations notables dans le fonctionnement de l'enceinte de réaction, en particulier du point de vue thermique du réacteur et que le débit de traitement soit maximisé avec les équipements utilisés, le cycle de fonctionnement doit avoir une durée minimale 5 à 10 minutes pour ne pas conduire à une fatigue accélérée et injustifiée des équipements, en particulier des organes de sectionnement. La hauteur de la capacité de pressurisation 32 doit être suffisante pour assurer une résolution correcte de la mesure de niveau 38. Elle doit être au minimum de 5 à 10 cm. Enfin, pour que l'interruption de l'alimentation en déchet de l'enceinte de réaction 2, le ratio entre le débit de la pompe d'alimentation en déchets 42 et celui de l'alimentation du procédé au moyen du dispositif d'injection 24 doit être au minimum de 10 à 20 afin de maximiser le rapport entre la durée de l'étape d'injection du déchet par rapport à la durée de la phase de remplissage. Ce rapport doit avoir une valeur supérieure à 90-95%.

Il est possible de supprimer les discontinuités dans l'injection du déchet dans l'enceinte de réaction 2 en utilisant un second dispositif d'injection semblable au dispositif 24. Les deux dispositifs d'injection utilisent les équipements communs que sont la pompe de circulation du déchet 42, la pompe volumétrique de circulation de fluide hydraulique 16 et l'enceinte de réaction 2. L'un de ces dispositifs se remplit en déchets pendant que l'autre est en phase d'injection. Dans ces conditions, la durée de la phase d'injection peut être égale à celle de la phase de remplissage en déchet. Cela permet de réaliser une injection continue des déchets.

L'installation et le procédé d'injection qui viennent d'être décrits sont peu exigeants en apport d'énergie extérieure et par conséquent leur coût de fonctionnement est abaissé. En outre, un autre avantage de cette installation et du procédé est de permettre le traitement de matières en suspension dans le déchet liquide. En effet, les particules d'un diamètre supérieur 7 µm ne sont pas admises par les pompes à haute pression, c'est-à-dire les pompes dont la pression de refoulement dépasse 100 bar. Les procédés en eau sous pression de type classique ne s'appliquent donc pas au traitement d'une phase aqueuse contenant des déchets en suspension. Au contraire, le dispositif de l'invention permet l'injection à débit contrôlé de matières organiques contenant des particules en suspension. Ces particules peuvent être organiques ou minérales. La valeur maximale de granulométrie de ces particules est limitée par la dimension des diamètres de passage des vannes de sectionnement, des piquages et des tuyauteries dans lesquelles chemine le déchet. De préférence, la taille maximale des particules ne dépassera pas le tiers du diamètre de passage minimal dans les circuits.

Le procédé de l'invention permet aussi de valoriser l'énergie contenue dans l'effluent gazeux sortant du séparateur 14. L'effluent gazeux/aqueux issu de la zone réactionnelle est séparé à haute pression dans le séparateur 14. Il est purgé par une vanne de régulation 18 ou un déverseur permettant de réguler la pression du procédé à sa valeur nominale contrôlée par la mesure de pression dans la canalisation 10. Il est possible d'exploiter le flux gazeux à haute pression directement à la sortie de la vanne de régulation 18. De manière plus classique comme illustré sur la figure, le flux gazeux est introduit dans une capacité tampon 60. Une vanne de sectionnement à actionneur 62 permet l'alimentation pneumatique du moteur pneumatique ou de la turbine 64 accouplée mécaniquement au groupe de compression 6 d'air procédé. Le gaz issu de ce dispositif pneumatique est évacué vers l'exutoire des gaz 66. En cours de fonctionnement, la puissance électrique fournie au moteur du compresseur permet le maintien du débit de compression requis et complète la puissance pneumatique fournie. Ce dispositif permet de valoriser au mieux la puissance pneumatique que contient l'effluent gazeux sous haute pression et ainsi de diminuer la puissance électrique nécessaire à la génération du débit d'air du procédé.

Les effluents gazeux sous haute pression issus de la vanne de régulation 18 sont collectés en continu dans la capacité tampon de gaz 60 dont la pression est régulée par une vanne de régulation ou d'un déverseur 61. La pression dans la capacité tampon est d'environ 10 à 50 bar.

L'installation comprenant le dispositif d'injection de matières organiques en suspension de l'eau qui vient d'être décrit permet d'adapter à des procédés de taille laboratoire ou pilote une capacité d'injection qui n'est pas disponible commercialement. L'injection à haute pression et à débit régulé de matières en suspension est valable pour des débits d'injection de l'ordre de la centaine de kilogramme par heure. Pour des débits plus faibles, l'injection directe de ce type de fluides ne peut être réalisée qu'au moyen de dispositifs à piston de type pousse-seringue dont la robustesse pour l'exploitation sur de longues périodes est insuffisante. Le dispositif de l'invention s'applique à la qualification de procédés à petite échelle, au développement de procédés industriels de petite taille tels que ceux qui sont requis par l'industrie du traitement des déchets nucléaires, ou du traitement de déchets organiques produit en environnement confiné de petite taille comme les bateaux, les sous-marins ou les capsules spatiales. En particulier, il permet d'envisager l'évaluation de la destruction de solides organiques par un procédé OHT continu, non seulement du point de vue des propriétés de minéralisation dans l'eau supercritique, mais également en validant l'intérêt du couplage entre le fluide supercritique et une action mécanique telle que la réalise la turbine axiale 46. Il s'applique encore au traitement de résines échangeuses d'ions contaminées présentes dans l'industrie du traitement du combustible nucléaire irradié et de l'armement nucléaire.

Le procédé et l'installation de l'invention s'appliquent également au traitement de boues de station d'épuration ou d'effluents industriels tel que ceux de la pharmacie, de la chimie, de la pétrochimie, de l'agroalimentaire, de la papeterie et les déchets agricoles. Il permet d'injecter des effluents contenant des matières en suspension jusqu'à une pression de 300 bar dans une large gamme de débit. De plus, la récupération d'énergie mécanique diminue le coût de fonctionnement de l'installation mais aussi d'investissement, la pompe principale à haute pression étant parmi les trois postes les plus coûteux des procédés en eau sous pression de type classique.

## Revendications

1. Installation de traitement de matières comprenant une enceinte de réaction (2) d'un procédé en eau sous pression ayant une entrée (8) des matières à traiter, une entrée (4) d'un mélange gazeux oxydant, par exemple de l'air, comprimé à la pression opératoire, une sortie (10) d'un effluent liquide/gaz et un dispositif (24) d'injection de matières organiques raccordé à l'entrée (8) des matières à traiter, de l'enceinte de réaction (2), ledit dispositif comprenant une capacité de pressurisation (24) ayant un volume interne dans lequel est disposé un ensemble mobile (29) qui le compartimente de manière étanche en deux volumes variables, à savoir une capacité (32) de compression de la matière et une capacité (34) de mise en pression hydraulique, **caractérisée en ce que** la capacité variable de mise en pression (34) de ce dispositif est raccordée à la sortie (10) de l'effluent de l'enceinte de réaction (2) .

2. Installation selon la revendication 1, **caractérisée en ce que** l'ensemble mobile est constitué par un soufflet (29) ou par un piston mobile.

3. Installation selon la revendication 1 ou 2, **caractérisée en ce que** ledit dispositif (24) d'injection comporte une turbine (46) située à l'entrée de la capacité de compression (32) et permettant d'homogénéiser la matière à traiter.

4. Installation selon la revendication 3, **caractérisée en ce que** la turbine (46) est entraînée magnétiquement.

5. Installation selon l'une quelconque des revendications 1 à 3, **caractérisée en ce que** ledit dispositif (24) d'injection comporte un dispositif (38) de suivi du mouvement de l'ensemble mobile (29).

6. Installation selon la revendication 5, **caractérisée en ce que** ledit dispositif (24) d'injection comporte un tube guide (36) fixé à une paroi (28) de la capacité de mise en pression (24) et un axe guide (38) fixé à l'ensemble mobile (29) et coulissant dans le tube guide (36).

7. Installation selon l'une des revendications 5 ou 6, **caractérisée en ce que** le dispositif de suivi du mouvement de l'ensemble mobile (29) est un dispositif magnétique (38) de recopie de la position de l'axe guide (33) dans le tube guide (36).

8. Installation selon l'une quelconque des revendications précédentes, **caractérisée en ce qu'**elle comporte un séparateur liquide/gaz (14) pour séparer l'effluent sortant de l'enceinte de réaction (2) en une phase liquide et en une phase gazeuse la phase liquide étant introduite dans la capacité de mise en pression (34) du dispositif d'injection (34) du dispositif d'injection (24).

9. Installation selon la revendication 8, **caractérisée en ce que** la phase liquide est introduite dans la capacité (34) de mise en pression par une pompe volumétrique (16), notamment par une pompe à engrenage entraînée magnétiquement.

10. Installation selon l'une quelconque des revendications précédentes, **caractérisée en ce que** la phase gazeuse de l'effluent issu du séparateur liquide/gaz (14) est introduite dans une turbine ou un moteur à gaz (64).

11. Installation selon la revendication 10, **caractérisée en ce que** le moteur ou la turbine (64) entraînent au moins partiellement le groupe (6) de compression de mélange gazeux oxydant introduit dans l'enceinte de réaction (2).

12. Installation selon l'une quelconque des revendications précédentes, **caractérisée en ce qu'**elle comporte deux dispositifs (24) d'injection de matières fonctionnant en opposition de phase.

13. Installation selon l'une quelconque des revendications précédentes, dans lequel les matières sont des matières solides sous forme particulaire dispersées dans un fluide.

14. Procédé de traitement de matières en eau sous pression dans une installation selon l'une quelconque des revendications précédentes, **caractérisé en ce qu'**il comprend les étapes suivantes :
- on remplit la capacité de pressurisation (32) de matières à traiter ;
- on pressurise et on injecte la matière à traiter en mettant en communication la capacité de mise en pression (34) du dispositif d'injection (24) avec la sortie (10) de l'enceinte de réaction ;
- on poursuit l'injection des matières jusqu'à ce que la capacité de pressurisation (32) soit vide ;
- on dépressurise la capacité de mise en pression hydraulique (34) en interrompant la communication entre la capacité (34) et l'enceinte de réaction.

15. Procédé selon la revendication 14, dans lequel on introduit les matières dans la capacité de pressurisation (32) au moyen d'une pompe centrifuge à grand débit (42).

16. Procédé selon la revendication 15, **caractérisé en ce que** le débit de la pompe centrifuge (42) est compris entre 10 fois et 20 fois le débit d'injection des matières à traiter dans l'enceinte de réaction (2).

17. Procédé selon l'une des revendications 14 à 16, **caractérisé en ce que** la durée du cycle est comprise entre 5 minutes et 10 minutes.

18. Procédé selon l'une quelconque des revendications 14 à 17, utilisé pour l'injection de matières organiques contenant des particules de matières organiques solides en suspension, **caractérisé en ce que** la taille maximale des particules est d'environ un tiers du diamètre de passage minimal dans les circuits et dans les organes de sectionnement.

## Patentansprüche

1. Vorrichtung zur Behandlung von Substanzen, umfassend einen Reaktionsbehälter (2) für ein Verfahren mit unter Druck stehendem Wasser, welcher einen Einlass (8) für die zu behandelnden Substanzen, einen Einlass (4) für eine oxidative Gasmischung, beispielsweise Luft, auf den Betriebsdruck verdichtet, einen Ausgang (10) für einen Flüssigkeit/Gas-Ablauf und eine Injektionsvorrichtung (24) für organische Substanzen aufweist, welche mit dem Einlass (8) für die zu behandelnden Substanzen des Reaktionsbehälters (2) verbunden ist, wobei die Vorrichtung eine Druckkapazität (24) umfasst, welche ein internes Volumen aufweist, in welchem eine bewegliche Anordnung (29) angeordnet ist, welche es in abgedichteter Weise in zwei variable Volumina unterteilt, nämlich eine Kapazität (32) für die Kompression der Substanz und eine Kapazität (34) zum Versetzen unter hydraulischen Druck, **dadurch gekennzeichnet, dass** die variable Kapazität zum Versetzen unter Druck (34) der Vorrichtung mit dem Ausgang (10) für den Ablauf des Reaktionsbehälters (2) verbunden ist.

2. Vorrichtung nach Anspruch 1, **dadurch gekennzeichnet, dass** die bewegliche Anordnung durch einen Balg (29) oder durch einen beweglichen Kolben gebildet ist.

3. Vorrichtung nach Anspruch 1 oder 2, **dadurch gekennzeichnet, dass** die Injektionsvorrichtung (24) eine Turbine (46) umfasst, welche am Eingang der Kompressionskapazität (32) angeordnet ist und ein Homogenisieren der zu behandelnden Substanz erlaubt.

4. Vorrichtung nach Anspruch 3, **dadurch gekennzeichnet, dass** die Turbine (46) magnetisch angetrieben ist.

5. Vorrichtung nach einem der Ansprüche 1 bis 3, **dadurch gekennzeichnet, dass** die Injektionsvorrichtung (24) eine Vorrichtung (38) zum Folgen der Bewegung der beweglichen Anordnung (29) umfasst.

6. Vorrichtung nach Anspruch 5, **dadurch gekennzeichnet, dass** die Injektionsvorrichtung (24) ein Führungsrohr (36), welches an einer Wand (28) der Kapazität zum Versetzen unter Druck (24) befestigt ist, und eine Führungsachse (38) umfasst, welche an der beweglichen Anordnung (29) befestigt ist und in dem Führungsrohr (36) gleitet.

7. Vorrichtung nach einem der Ansprüche 5 oder 6, **dadurch gekennzeichnet, dass** die Vorrichtung zum Folgen der Bewegung der beweglichen Anordnung (29) eine magnetische Vorrichtung (38) zum Wiedergeben der Position der Führungsachse (33) in dem Führungsrohr (36) ist.

8. Vorrichtung nach einem der vorhergehenden Ansprüche, **dadurch gekennzeichnet, dass** sie einen Flüssigkeit/Gas-Separator (14) zum Separieren des Ablaufs, welcher aus dem Reaktionsbehälter (2) austritt, in eine flüssige Phase und in eine Gasphase umfasst, wobei die flüssige Phase in die Kapazität zum Versetzen unter Druck (34) der Injektionsvorrichtung (34) der Injektionsvorrichtung (24) eingegeben wird.

9. Vorrichtung nach Anspruch 8, **dadurch gekennzeichnet, dass** die flüssige Phase in die Kapazität zum Versetzen unter Druck (34) durch eine volumetrische Pumpe (16) eingegeben wird, insbesondere durch eine magnetisch angetriebene Zahnradpumpe.

10. Vorrichtung nach einem der vorhergehenden Ansprüche, **dadurch gekennzeichnet, dass** die Gasphase des Ablaufs, welcher von dem Flüssigkeit/Gas-Separator (14) ausgegeben wird, in eine Turbine oder einen Gasmotor (64) eingegeben wird.

11. Vorrichtung nach Anspruch 10, **dadurch gekennzeichnet, dass** der Motor oder die Turbine (64) wenigstens teilweise die Gruppe (6) zur Kompression der oxidativen Gasmischung antreibt, welche in den Reaktionsbehälter (2) eingegeben wird.

12. Vorrichtung nach einem der vorhergehenden Ansprüche, **dadurch gekennzeichnet, dass** sie zwei Injektionsvorrichtungen (24) für Substanzen umfasst, welche gegenphasig arbeiten.

13. Vorrichtung nach einem der vorhergehenden Ansprüche, wobei die Substanzen feste Substanzen in Partikelform, gelöst in einem Fluid, sind.

14. Verfahren zur Behandlung von Substanzen mit unter Druck stehendem Wasser in einer Vorrichtung nach einem der vorhergehenden Ansprüche, **dadurch gekennzeichnet, dass** es die folgenden Schritte umfasst:
- Füllen der Kapazität zum Versetzen unter Druck (32) mit zu behandelnden Substanzen;
- Versetzen unter Druck und Injizieren der zu behandelnden Substanz, indem die Kapazität zum Versetzen unter Druck (34) der Injektionsvorrichtung (24) mit dem Ausgang (10) des Reaktionsbehälters in Verbindung gesetzt wird;
- Durchführen der Injektion der Substanzen, bis die Kapazität zum Versetzen unter Druck (32) leer ist;
- Ablassen des Drucks der Kapazität zum hydraulischen Versetzen unter Druck (34), indem die Verbindung zwischen der Kapazität (34) und dem Reaktionsbehälter unterbrochen wird.

15. Verfahren nach Anspruch 14, wobei die Substanzen in die Kapazität zum Versetzen unter Druck (32) mittels einer Zentrifugalpumpe mit großem Durchsatz (42) eingegeben werden.

16. Verfahren nach Anspruch 15, **dadurch gekennzeichnet, dass** der Durchsatz der Zentrifugalpumpe (42) zwischen dem zehnfachen und dem zwanzigfachen des Injektionsdurchsatzes der zu behandelnden Substanzen in dem Reaktionsbehälter (2) beträgt.

17. Verfahren nach einem der Ansprüche 14 bis 16, **dadurch gekennzeichnet, dass** die Dauer des Zyklus zwischen 5 Minuten und 10 Minuten beträgt.

18. Verfahren nach einem der Ansprüche 14 bis 17, verwendet für die Injektion von organischen Substanzen, welche feste Partikel von organischen Substanzen in Suspension enthalten, **dadurch gekennzeichnet, dass** die maximale Größe der Partikel in etwa ein Drittel des Durchmessers des minimalen Durchgangs in den Leitungen und in den Trennelementen beträgt.

## Claims

1. Installation for the treatment of matter comprising a reaction enclosure (2) in a pressurized water method having an inlet (8) for the matter to be treated, an inlet (4) for an oxidizing gaseous mixture e.g. air compressed to operating pressure, an outlet (10) for a liquid/gas effluent, and a device (24) for injecting matter connected to the inlet (8) for the matter to be treated, of the reaction enclosure (2), said device comprising a pressurizing capacity (24) having an inner volume in which a mobile assembly (29) is arranged compartment this volume sealingly into two variable volumes, namely a matter compressing capacity (32) and a hydraulic pressurizing capacity (34), **characterized in that** the variable pressurizing capacity (34) of this device is connected to the effluent outlet (10) of the reaction enclosure (2).

2. Installation according to claim 1, **characterized in that** the mobile assembly consists of a bellows (29) or a mobile piston.

3. Installation according to claim 1 or 2, **characterized in that** said device (24) comprises a turbine (46) located at the inlet of the compressing capacity (32) and enabling homogenization of the matter to be treated.

4. Installation according to claim 3, **characterized in that** the turbine (46) is magnetically driven.

5. Installation according to any of claims 1 to 3, **characterized in that** said device (24) comprises a device (38) for tracking the movement of the mobile assembly (29).

6. Installation according to claim 5, **characterized in that** said device (24) comprises a guide tube (36) fixed to a wall (28) of the pressurizing capacity (24), and a guide shaft (38) fixed to the mobile assembly (29) sliding within the guide tube (36).

7. Installation according to either of claims 5 or 6, **characterized in that** the movement tracking device of the mobile assembly (29) is a magnetic device (38) copying the position of the guide shaft (33) in the guide tube (36).

8. Installation according to any preceding claim, **characterized in that** it comprises a liquid/gas separator (14) to separate the effluent leaving the reaction enclosure (2) into a liquid phase and a gaseous phase, the liquid phase being sent to the pressurizing capacity (24) of injection device (34), of injection device (24).

9. Installation according to claim 8, **characterized in that** the liquid phase is sent to the pressurizing capacity (34) by a displacement pump (16), in particular by a gear pump driven magnetically.

10. Installation according to any preceding claim, **characterized in that** the gaseous phase of the effluent leaving the liquid/gas separator (14) is sent to a turbine or gas motor (64).

11. Installation according to claim 10, **characterized in that** the motor or turbine (64), at least in part, drive the unit (6) compressing the oxidizing gaseous mixture added to the reaction enclosure (2).

12. Installation according to any preceding claim, **characterized in that** it comprises two matter injecting devices (24) operating in phase opposition.

13. Installation according to any preceding claim, in which the matter is solid matter in particulate form dispersed in a fluid.

14. Pressurized water method for treating matter in an installation conforming to any preceding claim, **characterized in that** it comprises the following steps:
- the capacity (32) for pressurizing the matter to be treated is filled;
- pressure is applied and the matter to be treated is injected by placing in communication the pressurizing capacity (34) of the injection device (24) with the outlet (10) of the reaction enclosure;
- the injection of matter is continued until the pressurizing capacity (32) is empty;
- the hydraulic pressurizing capacity (34) is depressurized by shutting the communication between the capacity (34) and the reaction enclosure.

15. Method according to claim 14, in which the matter is added to the pressurizing capacity (32) by means of a high flow rate centrifugal pump (42).

16. Method according to claim 15, **characterized in that** the flow rate of the centrifugal pump (42) is between 10 and 20 times the injection rate of the matter to be treated into the reaction enclosure (2) .

17. Method according to any of claims 14 to 16, **characterized in that** the cycle time ranges from 5 to 10 minutes.

18. Method according to any of claims 14 to 17, used to inject organic matter containing particles of solid organic matter in suspension, **characterized in that** the maximum particle size is approximately one third of the diameter of the minimum passageway in the circuits and in the shut-off members.
